**Europäisches Patentamt**

**European Patent Office**

**Office européen des brevets**

(19)

(11) Veröffentlichungsnummer: **0 323 437 B1**

## (12) EUROPÄISCHE PATENTSCHRIFT

(45) Veröffentlichungstag der Patentschrift:
**11.09.91 Patentblatt 91/37**

(51) Int. Cl.$^5$: **G11B 23/023**

(21) Anmeldenummer: **89100214.9**

(22) Anmeldetag: **10.03.83**

(54) Behälter für flache Audio- oder Videoaufzeichnungsträger.

(30) Priorität: **28.04.82 DE 3215721**

(43) Veröffentlichungstag der Anmeldung:
**05.07.89 Patentblatt 89/27**

(45) Bekanntmachung des Hinweises auf die
Patenterteilung:
**11.09.91 Patentblatt 91/37**

(84) Benannte Vertragsstaaten:
**AT BE CH DE FR GB IT LI LU NL SE**

(56) Entgegenhaltungen:
**DE-A- 2 343 487**
**DE-A- 3 015 749**
**DE-B- 2 248 408**
**FR-A- 2 133 071**
**GB-A- 1 475 988**
**US-A- 3 603 478**

(60) Veröffentlichungsnummer der früheren
Anmeldung nach Art. 76 EPÜ : **0 092 666**

(73) Patentinhaber: **idn inventions and
development of novelties ag
Hartbertstrasse 9
CH-7002 Chur (CH)**

(72) Erfinder: **Ackeret, Peter
Allmendstrasse 18
CH-8700 Küsnacht (CH)**

(74) Vertreter: **Sparing Röhl Henseler
Patentanwälte European Patent Attorneys
Rethelstrasse 123
W-4000 Düsseldorf 1 (DE)**

## Beschreibung

Die Erfindung betrifft einen Behälter für flache Audio- oder Videoaufzeichnungsträger, insbesondere für Magnetbandkassetten.

Behälter für Magnetbandkassetten sind vielfach vorbekannt. Ein unter der Bezeichnung "cbox" marktgängiger Behälter ist in der DE-C-2248408 offenbart. Er umfaßt ein Gehäuse mit einer frontseitigen Öffnung, durch die ein Transportorgan für eine Kassette hindurch beweglich ist. In der eingeschobenen Position des Schiebers deckt dessen Frontwand die Gehäuseöffnung ab. Eine Ausschubfederanordnung spannt den Schieber in seine äußere Endlage vor, und eine Verriegelungsanordnung hält den eingeschobenen Schieber gegen die Vorspannung der Ausschubfeder im Gehäuse ; die Verriegelungsanordnung ist manuell entriegelbar.

Diese Merkmale sind auch bei dem Behälter gemäß vorliegender Erfindung vorgesehen.

Bei einer weiteren, aus der FR-A-2297478 bekannten Behälterbauart ist relativ zu einem Gehäuse ein Schieber beweglich, dessen Frontwand relativ zu einem Führungsabschnitt des Schiebers abklappbar ist. Eine solche Variante kann auch bei dem Behälter gemäß der vorliegenden Erfindung vorgesehen sein.

Insbesondere dann, wenn ein Behälter Platz für eine Mehrzahl von Kassetten bietet, ist es erwünscht feststellen zu können, welche Plätze belegt und welche frei sind. Ein Kassettenbehälter, der ein derartiges System aufweist, ist aus der US-A-3603478 bekannt.

Der Behälter umfaßt ein durch Rippen in Fächer für je eine Kassette unterteiltes Gehäuse aus Kunststoff. Jedes Fach ist durch einen zugeordneten Klappdeckel verschließbar. Eine aus dem Deckel ausgeformte Zunge trägt eine tastbare Warze. Befindet sich in einem Fach eine Kassette, so wird diese von einer aus der Rückwand des Behälters ausgeformten zweiten Zunge gegen die Gehäuseöffnung gedrückt. Wird nun der Deckel hochgeklappt, kann die Tastzunge etwas nach außen verbogen werden. Der Benutzer kann solche nach außen verformte Zungen abtasten um festzustellen, welche Fächer belegt sind. — Diese Bauart ist für die optische Anzeige des Belegungszustands weniger geeignet, weil die Anzeige in der wichtigsten, nämlich der frontseitigen Blickrichtung, kaum einen Unterschied zwischen leeren und belegten Fächern erkennen läßt. Darüber hinaus ist es geboten, einen speziellen, teuren Kunststoff zu verwenden, der auch unter Dauerlast elastisch bleibt, also keine Kaltflußeigenschaft hat, weil sonst nach kurzer Zeit die Belegungsanzeige versagt.

Aufgabe der Erfindung ist es, einen Magnetbandkassettenbehälter zu schaffen, der bequem bedienbar ist und insbesondere auch eine eindeutige optische Belegungsanzeige aufweist.

Diese Aufgabe wird durch die in den Patentansprüchen 1, 2 und 3 angegebenen Merkmalskombinationen gelöst.

Ausführungsbeispiele des Gegenstandes der Erfindung werden nachstehend unter Bezugnahme auf die beigefügten Zeichnungen im einzelnen erläutert :

Fig. 1 zeigt perspektivisch einen Kassettenbehälter mit einer erfindungsgemäßen optischen Anzeigeeinrichtung,

Fig. 2 stellt analog zu Fig. 1 eine Ausführung mit optischtaktiler Anzeigeeinrichtung dar,

Fig. 3 zeigt eine weitere Ausführungsform einer optischen Anzeigeeinrichtung bei zu einem Block gestapelten Behältern,

Fig. 4 bis 7 stellen die Ausführungsform nach Fig. 3 im Detail dar,

Fig. 8 und 9 zeigen Details der Ausführungsform nach Fig. 1,

Fig. 10 und 11 stellen eine Abwandlung der Ausführungsform nach Fig. 3 dar,

Fig. 12 und 13 zeigen im Detail eine Ausführungsform ähnlich Fig. 2, abgeleitet aus der Konstruktion nach Fig. 10 und 11,

Fig. 14 bis 17 stellen eine weitere Ausführung einer optischen Anzeigeeinrichtung dar,

Fig. 18 zeigt eine Abwandlung der Konstruktion nach Fig. 14 bis 17,

Fig. 19 und 20 stellen Einzelheiten des Kassettenbehälters dar, die für die Funktion der Anzeigeeinrichtung von Bedeutung sind,

Fig. 21 bis 23 zeigen eine weitere Ausführungsform einer optischen Anzeigeeinrichtung,

Fig. 24 und 25 stellen eine Abwandlung der letztgenannten Ausführungsform dar,

Fig. 26 bis 30 zeigen eine Ausführungsform der Anzeigeeinrichtung, die im stationären Teil des Behälters montiert ist,

Fig. 31 stellt eine Abwandlung der vorigen Ausführungsform dar,

Fig. 32 und 33 illustrieren die Anordnung der Anzeigeeinrichtung an einem Behälter für Video-Kassetten,

Fig. 34 bis 36 zeigen eine weitere Abwandlung des Behälters nach Fig. 4 bis 7,

Fig. 37 bis 41 zeigen eine gegenüber Fig. 4 bis 7 noch anders gestaltete Ausführungsform dar,

Fig. 42 bis 47 zeigen einen weiteren Video-Kassettenbehälter gemäß der Erfindung.

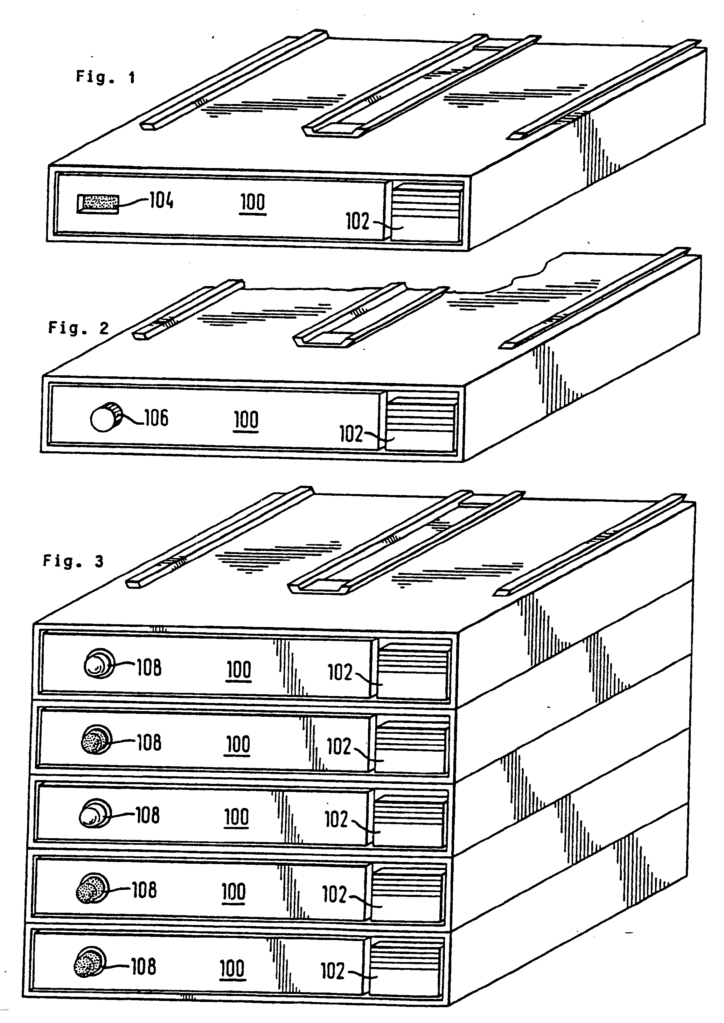

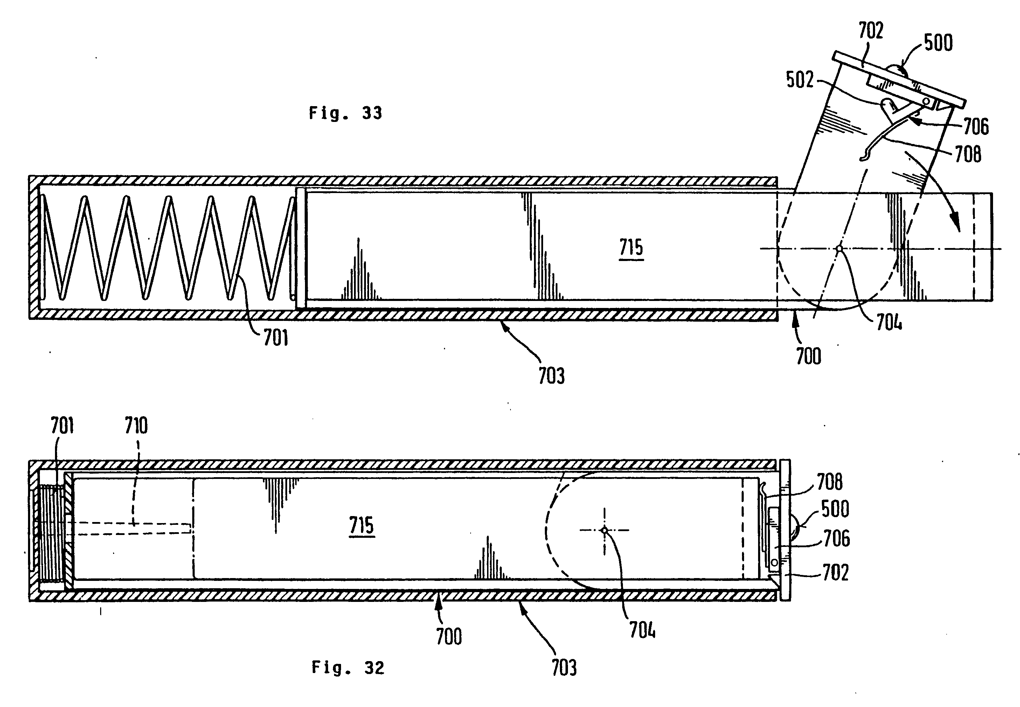

Alle dargestellten Ausführungsformen — bis auf Fig. 32/33 und Fig. 42 bis 47 — zeigen Anzeigeeinrichtungen an Behältern vom cbox-Typ. Derartige Behälter besitzen ein Außengehäuse mit Stapelstegen bzw. Stapelnuten, um aus mehreren Behältern Blöcke zu bilden (Fig. 3), und jedes Außengehäuse enthält einen unter Federvorspannung stehenden Transportschieber, dessen Stirnwand immer für den Benutzer zugänglich ist, weil der Behälter durch Betätigen einer im Schieberstirnwandbereich vorgesehenen Taste geöffnet wird. Dabei wird der Schieber von einer Feder in eine Position ausgefahren, in der die Kassette einlegbar bzw. entnehmbar ist.

Aufgrund dieser vorstehenden Konstruktion ist es bevorzugt, die Anzeigeeinrichtung im Bereich der Schieberstirnwand sichtbar zu machen.

Fig. 1 zeigt schematisch eine optische Anzeigeeinrichtung. In der Schieberstirnwand 100 ist nahe dem der Auslösetaste 102 abgelegenen Ende ein Durchbruch 104 vorgesehen, hinter dem eine von einer eingelegten Kassette weggedrückte Signalfahne oder dergleichen nach Entnehmen der Kassette sichtbar wird.

Gemäß Fig. 2 steht bei entnommener Kassette ein Kopf 106 über die Stirnwand 100 des Schiebers vor, der bei Einlegen der Kassette zurückgeführt wird, so daß seine Endfläche bündig mit der Außenfläche der Schieberstirnwand liegt. Hier ist das Signal sowohl sichtbar als auch tastbar.

In Fig. 3 sind die Schieberstirnwände mit linsenartigen Fenstern 108 versehen, hinter denen bei eingelegter Kassette ein Signal erscheint.

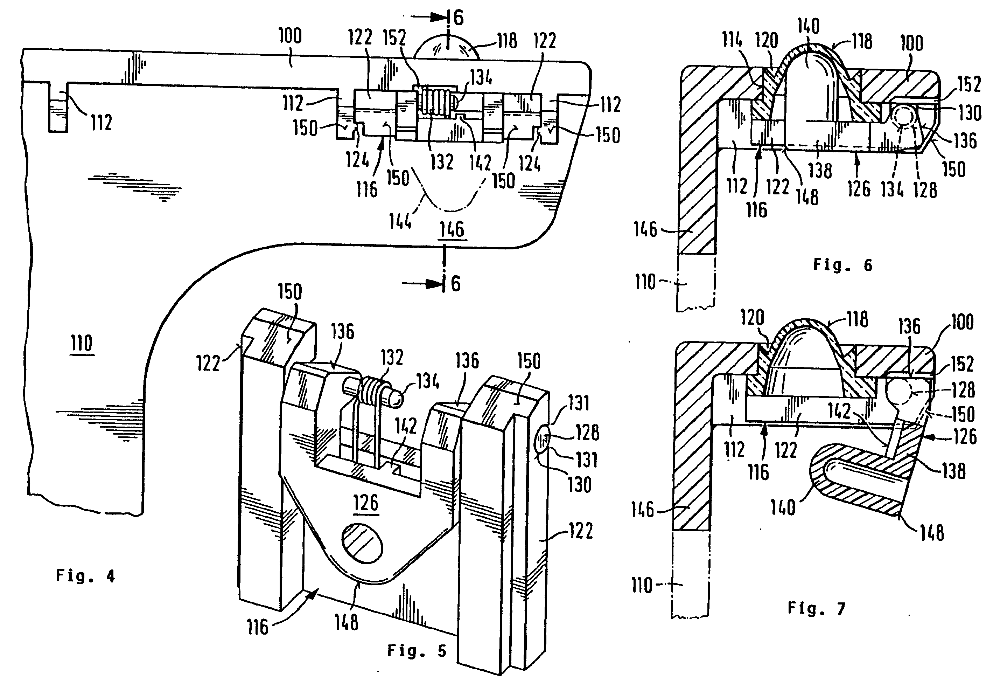

Die Fig. 4 bis 7 stellen die letztere Ausführungsform im Detail dar. Fig. 4 zeigt eine Draufsicht auf das betreffende frontseitige Ende des Schiebers mit Stirnwand 100 und Schieberbodenplatte 110 ; an den aus Kunststoff gespritzten Schieber sind innere Stirnwandrippen 112 angeformt, an die sich die Bandspiegelkante einer eingelegten Kassette anlegt. Ferner weist die Stirnwand 100 einen zylindrischen Durchbruch 114 auf. In den Durchbruch 114 ist eine Blende 116 aus transparentem Kunststoff eingepreßt, die mit einem Dom 118 — an seinem Fußkreis 120 aus ästhetischen Gründen etwas hinterschnitten — über die Frontwandung 100 hinausragt und sich mit ihrer Grundplatte 122 an die Innenseite der Frontwandung anlegt ; sie wird zwischen Rippen 112 eingedrückt und von Nocken 124 an den Rippen, die beim Eindrücken auffedern, gehalten.

An der Grundplatte ist ein Signalhebel 126 angelenkt, der vorzugsweise aus einem mit fluoreszierendem Material pigmentierten Kunststoff gespritzt ist ; derartige Pigmente werden von der Firma Sterling Colour Company, London, angeboten. Der Signalhebel 126 ist mit Zapfen 128 in Lagereinschnitten 130 der Grundplatte 122 drehbar vormontiert, wobei Nasen 131 das Auseinanderfallen der Anordnung im vormontierten Zustand — perspektivisch in Fig. 5 dargestellt — verhindern. Eine Schenkelhalsfeder 132 sitzt mit ihrem Wickel auf einem mit den Zapfen 128 koaxialen Stift 134 ; einer ihrer Schenkel stützt sich an der Grundplatte innen ab, während der andere den Signalhebel in die in Fig. 7 dargestellte "Leeranzeigeposition" vorspannt, die er nach Entnehmen der Kassette einnimmt, wobei sich seine Anschlagkante 136 an der Schieberstirnwand abstützt. Der Hebelarm 138 steht dabei unter etwa 15° schräg zur Ebene des Schieberbodens 110, so daß der Schieber gefahrlos in das Gehäuse (in Fig. 4 bis 7 nicht gezeigt) eingeschoben werden kann. Der Hebelarm 138 trägt den Signalkopf 140, der durch Einlegen einer Kassette in die in Fig. 6 erkennbare Position verschwenkt wird und sich mit seiner zur Innenfläche des Doms 118 komplementär ausgebildeten Kontur an diese anlegt. Der eingefärbte Signalkopf ist durch den transparenten Dom hindurch auch aus größerer Entfernung deutlich erkennbar. Ein an den Hebelarm 138 angeformter Steg 142 verhindert ein Abrutschen des Federschenkels.

Die Endkontur 144 des Hebelarms 138 ist in Fig. 4 gestrichelt angedeutet ; man erkennt, daß der Benutzer beim Erfassen einer eingelegten Kassette durch den Bereich 146 der Schieberbodenplatte daran gehindert wird, den Signalhebel unsanft zu berühren und dabei zu beschädigen. Die Abrundung bei 148 und die Abschrägung bei 150 vermeiden ein Verhaken der Kassette beim Entnehmen bzw. Einlegen, und eine Einbuchtung 152 in der Stirnwand 100 bieten Platz für den Federwickel der Feder 132.

Vorstehend wurde das erste detaillierte Ausführungsbeispiel mit allen Einzelheiten erläutert, wie sie auch in den Figuren dargestellt sind. Bei den folgenden Ausführungsbeispielen wird hingegen im wesentlichen nur das jeweilige Prinzip erläutert, während die konstruktiven Details beiseitegelassen werden können, weil sie vom Fachmann sinngemäß aus der vorstehenden Beschreibung übertragbar sind ; dies bezieht sich auf notwendige Aussparungen, Abrundungen usw.

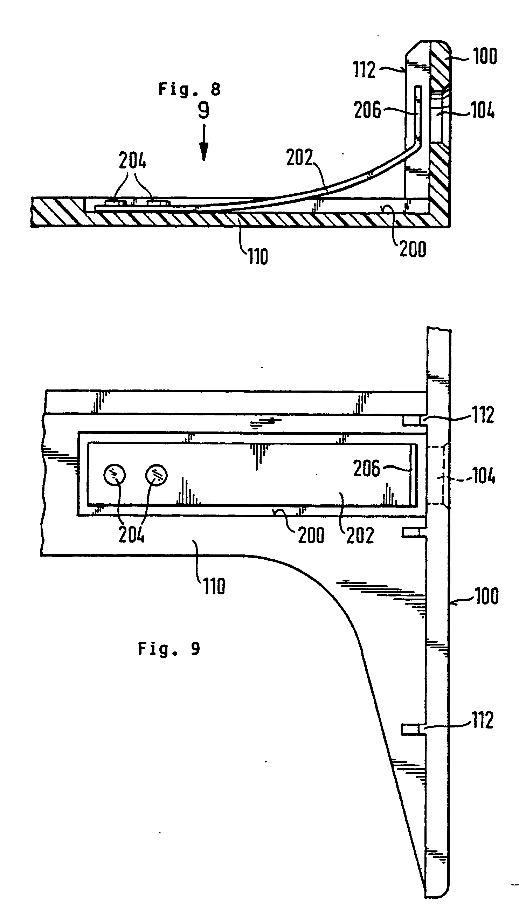

Fig. 8 bzw. 9 zeigen im Teillängsschnitt bzw. in Teildraufsicht eine Ausführungsform gemäß Fig. 1. In einer kanalartigen Ausnehmung 200 in der Schieberbodenplatte 110 ist eine Blattfeder 202 befestigt, etwa durch Niederschmelzen von zwei angeformten Füßchen 204 nach Aufsetzen der mit entsprechenden Bohrungen versehenen Feder. Die Blattfeder ist derart gebogen, daß ein abgewinkeltes Endstück 206 bei entnommener Kassette vor einer Durchbrechung 104 der Stirnwand 100 steht und von außen sichtbar ist, wobei die sichtbare Fläche zweckmäßig eingefärbt ist. Bei Einlegen der Kassette wird die Blattfeder auf die Bodenplatte 110 zu verformt, was das Einlegen der Kassette nicht behindert, weil die Abwinkelung 206 in den Bereich nahe der Stirnwand 100 ragt, in den die Kassette wegen der Rippen 112 nicht gelangen kann.

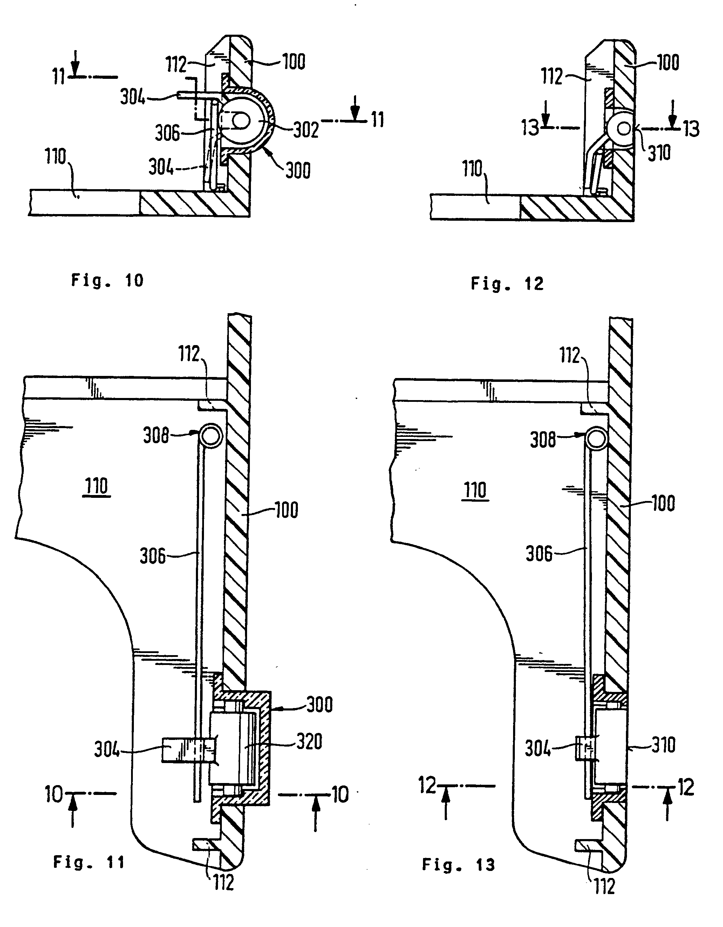

In der Ausführungsform nach Fig. 10 und 11 ist in einem transparenten Rahmen 300, eingefügt in eine Durchbrechung der Frontwand 100, eine Signalwalze 302 mit unterschiedlich eingefärbten Sektoren drehbar gelagert. Beim Einlegen einer Kassette wird der an die Walze 302 angeformte Flügel 304 aus der in Fig. 10 mit ausgezogenen Linien dargestellten Position in die gestrichelte Position verschwenkt, so daß in dem vom Rahmen 300 gebildeten Fenster ein farbabweichender Walzensektor sichtbar wird ; die Walze wird in die Leeranzeigeposition zurückgedreht durch den freien Arm 306 einer Drahtfeder 308. Nur der Flügel 304 ragt in den Kassettenaufnahmebereich ; alle anderen Teile sind wieder hinter den Rippen 112 geschützt.

Diese Anzeige ist nur optisch erfaßbar. Läßt man, wie in Fig. 12 und 13 dargestellt, den Rahmen nach außen offen und flacht die Walze 302 sektorförmig ab, so kann man das Signal auch ertasten, wie aus Fig. 12 ohne weiteres entnehmbar. Die Abflachung 310 erhält dann dasselbe Finish wie die Außenseite der Frontwandung 100, während der restliche zylindrische Mantel kontrastfarbig gefertigt wird.

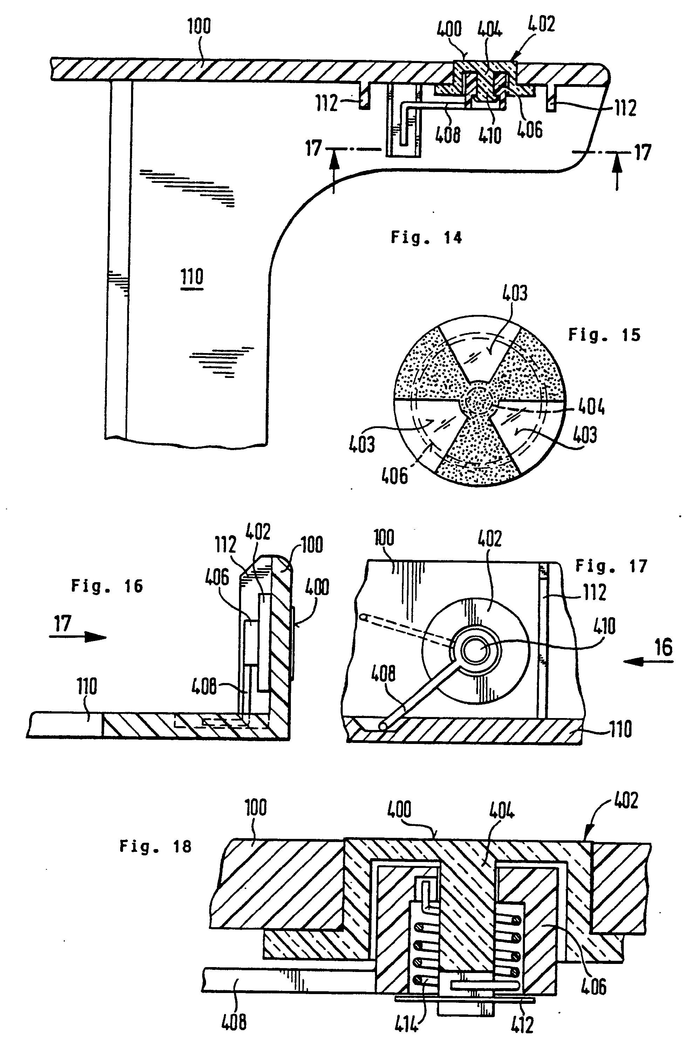

In der Ausführungsform nach Fig. 14 bis 17 ist die Frontscheibe 400 eines in einen Frontwanddurchbruch eingesetzten Lagerauges 402 nur in um 120° zueinander versetzten 60°-Sektoren 403 transparent (Fig. 15). Auf einem Zentralzapfen 404 ist drehbar eine Signalrolle 406 angeordnet, deren durch die transparenten Sektoren 403 sichtbare Stirnfläche ein zu diesen kongruentes Muster aufweist. Die Rolle 406 ist bei Einlegen der Kassette um 60° schwenkbar, wenn die Kassette auf den an der Rolle befestigten Arm 408 auftrifft. Die Rückstellung der Rolle in die Leeranzeigeposition erfolgt mittels einer zwischen Auge 402 und Rolle 406 wirkenden Torsionsfeder (Fig. 18) ; die Axialsicherung der Rolle auf dem Zapfen 404 wird durch den Schweißnocken 410 bewirkt. — Stattdessen kann die Sicherung auch durch eine Vorlagescheibe 412 erfolgen, wie in Fig. 18 dargestellt, die auch die Ausbildung und Anordnung der Feder 414 erkennen läßt.

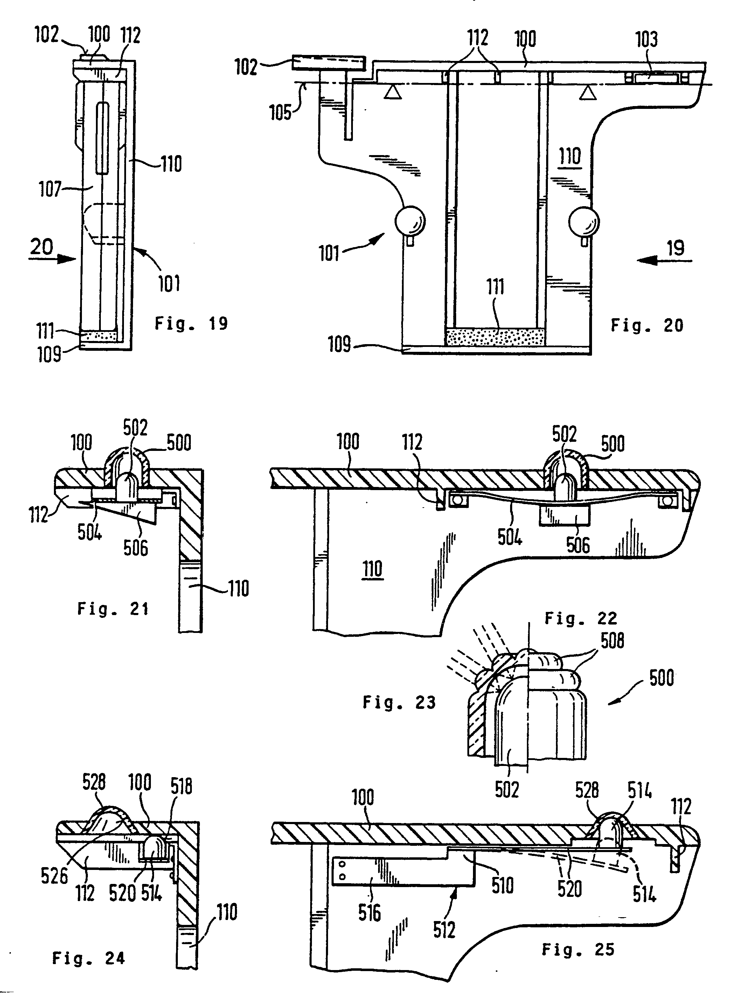

Die Fig. 19 und 20 zeigen in Seitenansicht bzw. Draufsicht jeweils einen vollständigen Schieber 101, bei dem irgendeine der zuvor beschriebenen Anzeigeeinrichtungen — insgesamt mit 103 markiert — vorgesehen ist. Die Linie 105 deutet die Bandspiegel-Stirnkante einer eingelegten Kassette 107 an, welche Kante immer an den Stegen 112 zur Anlage kommen muß, damit das jeweilige Betätigungsorgan der Anzeigeeinrichtung, das seinerseits um jeweils mindestens 0,1 mm in den Aufnahmebereich der Kassette ragen muß, mit Sicherheit auch von der Kassette bewegt wird. Da aber die Abmessungen der üblichen Kompaktkassetten toleranzenbehaftet sind, muß dafür gesorgt werden, daß auch die kleinste Kassette dazu in der Lage ist. Deshalb ist an der hochstehenden Rückplatte 109 des Schiebers 101 ein Schaumstoffstreifen 111 befestigt, der die Toleranzen ausgleicht und die Kassette gegen die Schieberstirnwand drängt.

Fig. 21 bis 23 zeigen eine weitere Ausführungsform. In die Schieberstirnwand 100 ist eine Linse 500 eingesetzt, hinter der ein Signalknopf 502 senkrecht zur Stirnwand 100 beweglich ist. Der Knopf sitzt auf einer am Schieberboden 110 beweglich befestigten Blattfeder 504, die in Richtung des Kassettenaufnahmebereichs vorgespannt ist und einen Auflaufkeil 506 trägt, mittels dem die Feder und damit der Kopf nach außen gedrückt werden, wenn eine Kassette eingelegt wird. Fig. 23 zeigt vergrößert einen Schnitt durch die Linse 500, die nach Art einer Fresnellinse Ringwülste 508 aufweist, die jeweils auf die Oberfläche des Knopfes in dessen Vollanzeigeposition (also bei eingelegter Kassette) fokussiert sind. Der Knopf ist deshalb nur in dieser Position richtig sichtbar. — Ähnlich ist die Ausführungsform nach Fig. 24 und 25 : Hier trägt eine bei 510 abgewinkelte Blattfeder 512 den Signalknopf 514. Der Arm 516 der Feder wird ähnlich wie in Fig. 8/9 von einer eingelegten Kassette in die in Fig. 24 dargestellte Position ausgelenkt, wobei die abgerundete Fläche 518 des Knopfes 514 auf der Schrägfläche 526 der Linse 528 abgleitet unter Auslenkung des Federarmes 520 in die in Fig. 25 gestrichelt angedeutete Position.

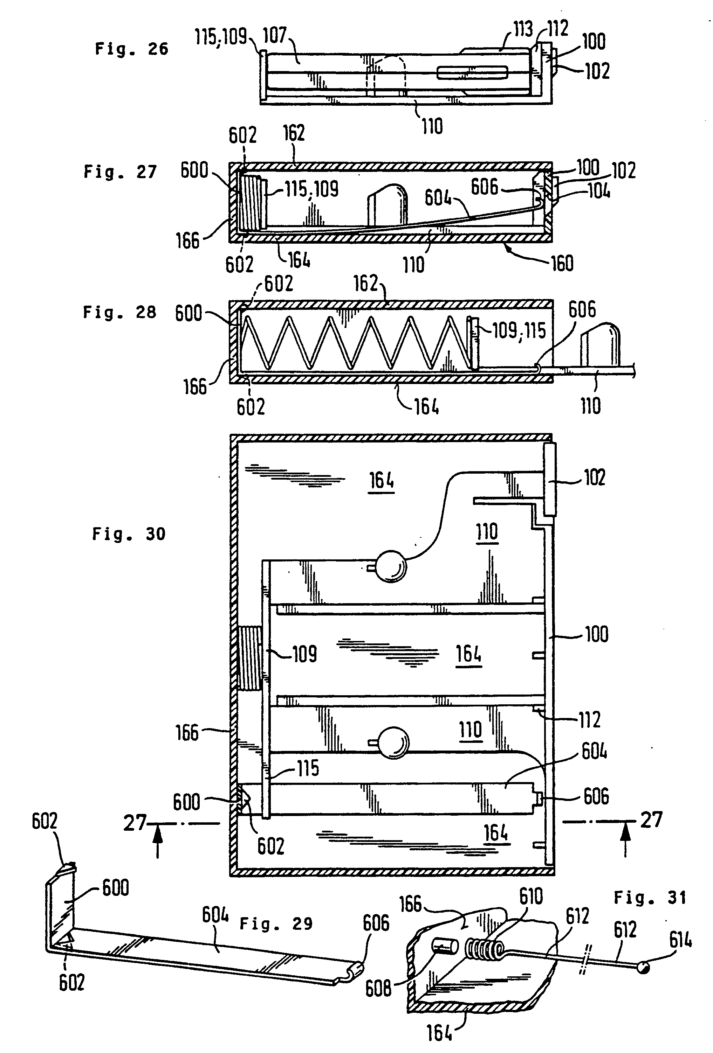

Bei allen insoweit beschriebenen Ausführungsformen war die Anzeigeeinrichtung als Bestandteil allein des Schiebers ausgebildet. In der Ausführungsform nach Fig. 26-30 weist die Schieberstirnwand 100 wieder einen Durchbruch 104 auf, hinter dem eine an einer Feder angeordnete Signalflagge oder dergleichen erscheint, wenn der Behälter keine Kassette enthält. Insoweit besteht Ähnlichkeit mit Fig. 8/9. Hier ist jedoch die Feder nicht am Schieber befestigt, sondern am Gehäuse 160 : Sie besitzt ein inneres, abgewinkeltes Endstück 600 mit Krallen 602, das zwischen Deckwandung 162 und Bodenwandung 164 des Gehäuses vor seiner Endwandung 166 eingeklemmt wird. Der Federarm 604 hat unter dem Bereich einer eingelegten Kassette 107 neben der Schieberführungsschiene Platz, wo diese dünner gegenüber ihrem Kopfspiegelteil 113 ist. Eine seitliche Verlängerung 115 der Schieberrückwand 109 drückt beim Ausfahren des Schiebers den Federarm 604 nach unten, so daß die Kassette unbehindert einlegbar und entnehmbar ist. Befindet sich keine Kassette im Behälter, federt der Arm 604 frei in die Position gemäß Fig. 27, und sein Signalende 606 wird hinter dem Durchbruch 104 sichtbar. — Eine abgewandelte Ausführung zeigt Fig. 31. Hier ist auf ein Pföstchen 608 an der Endwandung 166 des Gehäuses das schraubenförmig gewundene Ende 610 einer Drahtfeder 612 aufgesteckt, die im entspannten Zustand mit einem Signalkopf 614 durch einen Durchbruch 104 der Schieberstirnwand ragt, wenn der leere Behälter geschlossen ist. Wird eine Kassette eingelegt, wird die Feder ähnlich wie in Fig. 26-30 von dieser nach unten ausgelenkt. Schiebt man nun den Schieber zu, trifft seine Stirnwand auf den Signalkopf, der unter Komprimierung der vom Endabschnitt 610 gebildeten Schraubenfeder nach innen ausweicht, denn ein Ausknicken des Abschnitts 612 ist wegen der daraufliegenden Kassette nicht möglich.

Wie eingangs bereits erwähnt, beziehen sich die Figuren 32 und 33 auf einen Behälter für Video-Kassetten mit einem der drei marktgängigen Formate ("Betamax", "2000", "VHS"). Auf einem Schieber 700 ruht die Kassette 715 mit einer ihrer Schmalseiten. Der Schieber ist vorzugsweise durch eine Auswerffeder 701 aus einem Gehäuse 703 in eine Entnahmestellung beweglich. An dem Schieber ist ein Verschlußdeckel 702 bei 704 schwenkbeweglich angelenkt, der sich öffnet, wenn die Kassette vom Schieber aus dem Gehäuse 703 heraustransportiert wird. An diesem Deckel ist erfindungsgemäß eine Anzeigeeinrichtung 706 befestigt, die den unter Bezugnahme auf Fig. 4 bis 7 beschriebenen Aufbau hat. Zusätzlich ist allein noch eine Ausgleichsfeder 708 vorgesehen, die die Maßabweichungen zwischen den Kassettengrößen "2000" und "VHS" auszugleichen vermag. Für die kleinste Kassettenabmessung ("Betamax") hingegen ist es bevorzugt, in den Kassettenbehälter einen Anschlag etwa in Form eines von hinten in das Gehäuse eingeschobenen Stiftes 710 oder dergleichen vorzusehen. — Es versteht sich, daß auch die anderen beschriebenen Ausführungsformen von Anzeigeeinrichtungen in entsprechender Weise an derartige Behälter anpaßbar sind.

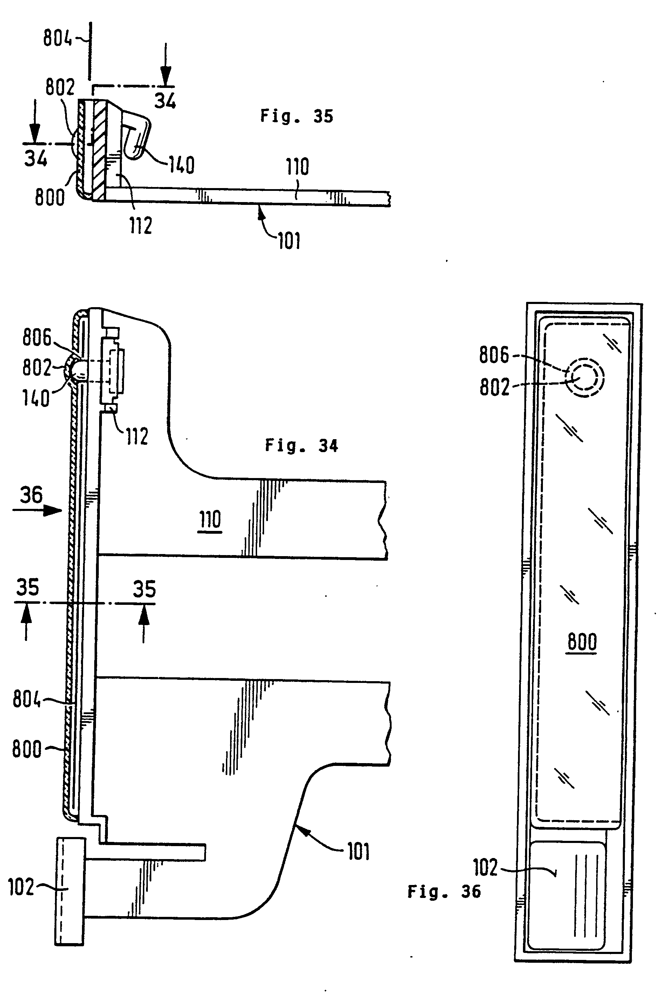

Die eingangs erwähnten cbox-Behälter werden auch in einer Ausführungsform geliefert, bei der vor der Schieberfrontwand noch ein transparentes Fenster vorgesehen ist, hinter dem ein Etikett eingelegt werden kann. Die Anbringung einer Anzeigeeinrichtung ähnlich wie in Fig. 4 bis 7 dargestellt, ist auch in einem solchen Falle möglich. Wie Fig. 34 bis 36 zeigen, ist dann an die transparente Fensterscheibe 800 eine linsenartige Ausbuchtung 802 angeformt, und das Etikett 804 ist bei 806 gelocht, so daß sich der Signalkopf 140 hindurcherstrecken kann und innerhalb des Etiketts durch die Scheibe hindurch sichtbar ist. Die Scheibe weist normalerweise eine Antireflex-Mattierung auf, die dann im Bereich der Ausbuchtung 802 nicht vorgesehen wird.

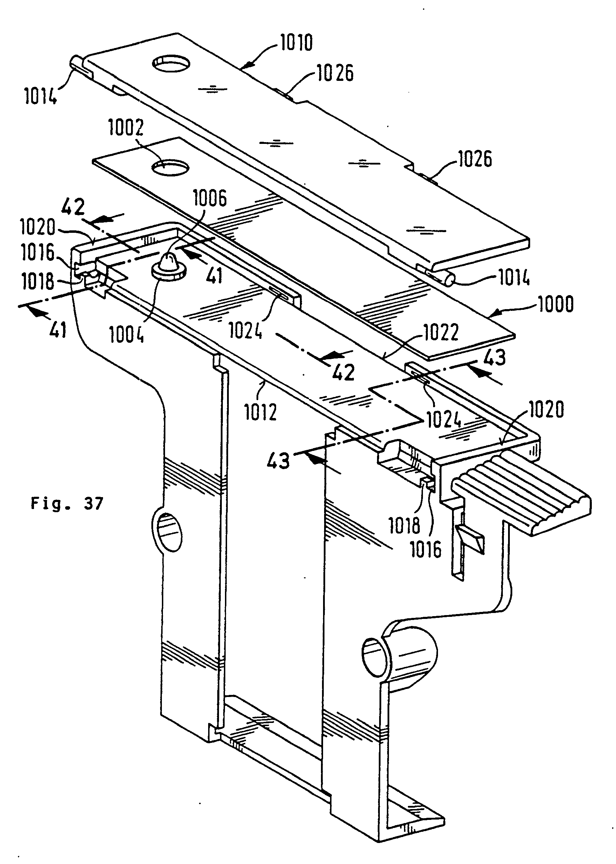

In der Ausführungsform nach Fig. 34 bis 36 ist das Etikett nur dann einlegbar, wenn das Organ 802 an die vorgesetzte Sichtscheibe angeformt ist und demgemäß der Einlegeschlitz für das Etikett, bei leerem Behälter, unversperrt ist. Alternativ könnte man auch das Etikett an der betreffenden Stelle mit einem Schlitz versehen, so daß es seitlich an dem Anzeigeorgan vorbeipaßt. Dies ist aber aus ästhetischen Gründen wenig erwünscht. Bevorzugt wird vielmehr die in Fig. 37 bis 41 dargestellte Variante.

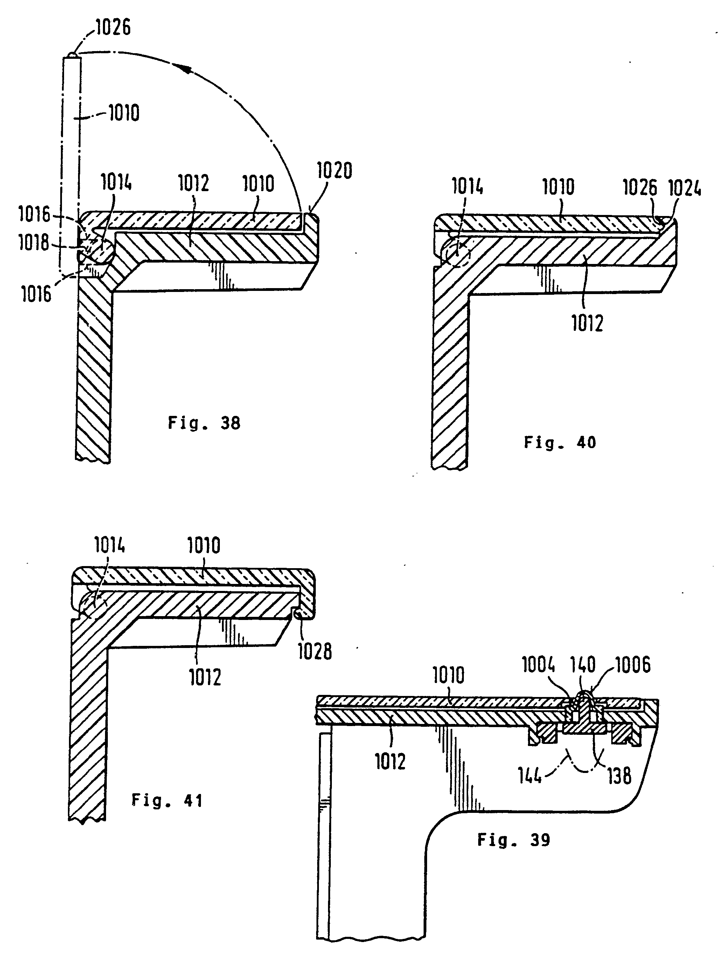

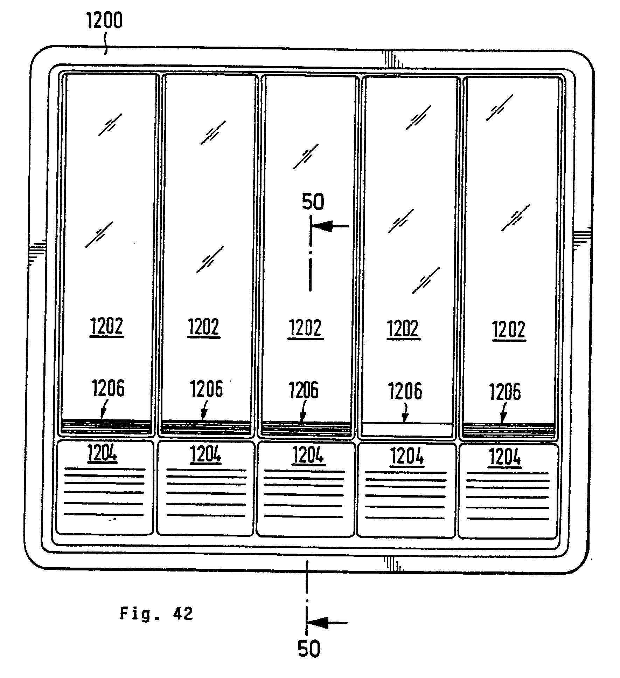

Fig. 37 zeigt perspektivisch den Schieber eines cbox-Behälters in dieser abgewandelten Form in Explosionsdarstellung, Fig. 38 ist ein Schnitt nach Linie 41-41 der Fig. 37, Fig. 39 und 40 sind entsprechende Schnittdarstellungen, und Fig. 41 ist eine Darstellung analog Fig. 40 in etwas abgewandelter Ausführung.

In dieser Ausführungsform kann das eigentliche Anzeigesystem der Ausführung nach Fig. 4 bis 7 entsprechen, wo also der Dom 118 permanent den für das Etikett bestimmten Raum durchsetzt. Das Etikett 1000 muß also jedenfalls ein Loch 1002 aufweisen, das über den Kragen 1004 des Doms 1006 paßt. Damit das Etikett 1000 überhaupt gewechselt werden kann, ist das Etikettenfenster 1010 gelenkig mit der Schieberstirnplatte 1012 verbunden. Das Etikettenfenster wird mit seinen Lagerzapfen 1014 in Lagernuten 1016 eingeschnappt und wird von Nasen 1018 gehalten ; die Nuten 1016 und die Nasen 1018 definieren eine "Drei-Viertel-Lagerschale", so daß das Fenster nicht mehr herausfallen kann. Die Nuten 1016 sind in einen vorstehenden Rand 1020 der Stirnplatte 1012 eingeformt, der bis zur Oberkante der Stirnplatte herumgezogen ist und von einer Grifföffnung 1022 unterbrochen ist. Beidseits der letzteren sind Einsenkungen 1024 in diesem Rand ausgebildet, die komplementär zu Dornen 1026 an der freien Endkante des Fensters 1010 ausgebildet sind und als Riegelfalle mit jenen zusammenwirken, wenn das Fenster eingedrückt wird. Die Grifföffnung 1022 erlaubt die Erfassung des Fensters und sein Herunterklappen unter elastischem Nachgeben der Teile 1024/1026. — Eine alternative Verriegelung ist in Fig. 41 gezeigt, wo das Fenster mit einem Rand 1028 die Oberkante der Schieberstirnplatte übergreift und sich dort verriegelt.

Die eigentliche Fensterfläche des Etikettenfensters 1010 liegt natürlich vor der Aufnahmeebene des Etiketts. Die Lagerzapfen 1014 dagegen sind hinter diese Ebene versetzt vorgesehen, und der hinter dem Fenster befindliche Freiraum erstreckt sich bis vor die Zapfen, so daß das Etikett den Platz vor der Schieberstirnplatte 1012 vollständig ausfüllen darf und nicht im Bereich seiner unteren Ecken beschnitten zu werden braucht, um Platz für die Gelenkanordnung zu schaffen. Außerdem wird dadurch das Einlegen eines Etiketts ohne große Handfertigkeit ermöglicht, weil beim Zuklappen des Fensters das Etikett automatisch in die richtige Lage geführt wird.

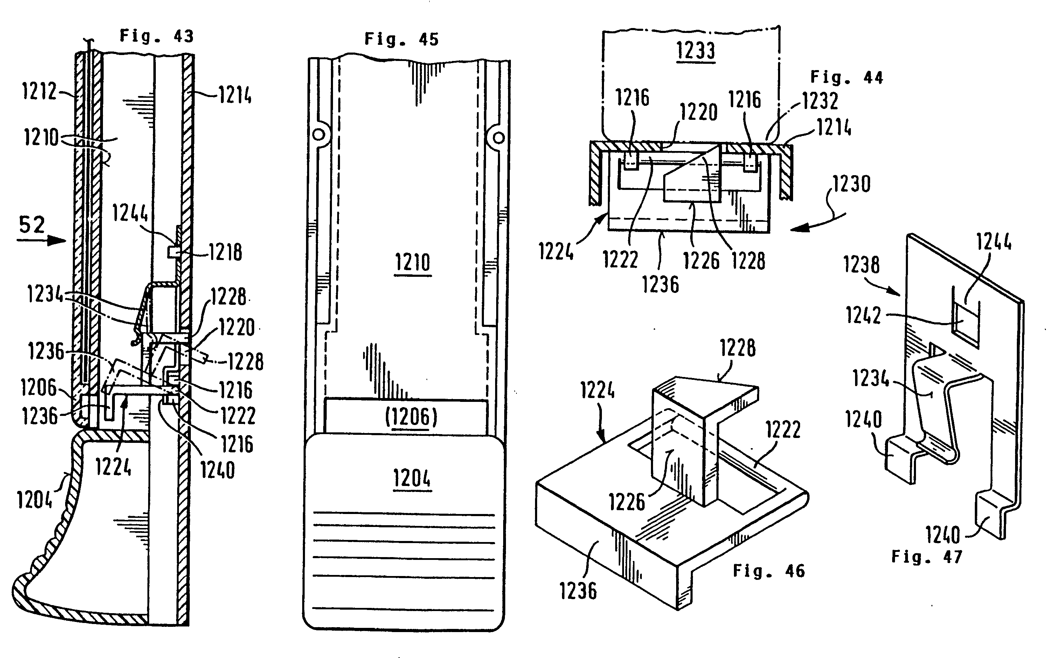

Die Fig. 42 bis 47 zeigen eine alternative Ausführung des Anzeigesystems gemäß der Erfindung am Deckel eines Kassettenbehälters, dessen grundsätzlicher Aufbau den Fig. 32 und 33 entspricht, so daß nur die wesentlichen Teile dargestellt sind. Fig. 42 zeigt dabei die Frontansicht eines Behälters für fünf Video-Kassetten, Fig. 43 ist eine Schnittdarstellung, Fig. 44 zeigt schematisch den Grundriß des Anzeigesystems, Fig. 45 zeigt in Frontansicht die Taste bei abgenommenem Etikettenfenster, und Fig. 46 und 47 stellen zwei Bauteile des Systems perspektivisch dar.

Der Behälter umfaßt ein Gehäuse 1200 mit Transportschiebern für Video-Kassetten, von denen in Fig. 42 nur die Gehäuseöffnung verschließende Deckel mit Etikettenfenster 1202 und Auslösetasten 1204 erkennbar sind. Im Fußbereich 1206 der Etikettenfenster ist, wie beim zuvor beschriebenen Ausführungsbeispiel, ein Anzeigefeld ausgebildet, und in Fig. 42 erkennt man, daß dieses Anzeigefeld bei vier der fünf Fenster dunkel ist, während es bei dem verbleibenden Fenster hell ist und damit anzeigt, daß der betreffende Transportschieber keine Video-Kassette enthält.

Die Schnittdarstellung nach Fig. 43 läßt die Taste 1204 mit ihrer Verlängerung 1210 und dem aufgesetzten Etikettenfenster 1212 sowie die vertikale Frontwandung 1214 des Deckels erkennen. An diese Frontwandung sind zwei Lagerhalbschalen 1216 und ein Haltezapfen 1218 angeformt, und die Frontwandung weist außerdem einen Durchbruch 1220 auf.

In die Lagerhalbschalen ist der Querzapfen 1222 eines Hebels (Fig. 46) 1224 drehbeweglich eingesetzt. Dieser Hebel dient als kombiniertes Fühl- und Anzeigeorgan : Sein Winkelarm 1226 ragt mit einem Keilabschnitt 1228 durch den Durchbruch 1220 und läuft beim Verschwenken des Deckels in Pfeilrichtung 1230 auf die Kante 1232 einer Video-Kassette 1233 auf, wodurch der Hebel 1224 in die in Fig. 43 mit ausgezogenen Linien dargestellte Anzeigeposition verschwenkt wird. Eine Blattfeder 1234 übt ein Drehmoment auf den Winkelarm 1226 aus und spannt ihn dadurch in die in Fig. 43 gestrichelt angedeutete "Abfühl"-position vor. Wird der Hebel von der Kassette verschwenkt, erscheint sein Signalarm 1236 im Fußbereich 1206, der dadurch abgedunkelt wird (Fig. 42). — Die Blattfeder 1234 ist Teil eines Stanz- und Biegeteils 1238 (Fig. 47), das neben der Feder 1234 noch zwei ebenfalls federnde Haltearme 1240 aufweist, die den Querzapfen 1222 in seinen Lagerschalen halten. Ein polygones Loch 1242 des Stanz- und Biegeteils 1238 ist über den Haltezapfen 1218 geschoben und verkrallt sich dort mittels eines eingeschnittenen Lappens 1244.

## Patentansprüche

1. Behälter für flache Audio- oder Videoaufzeichnungsträger, insbesondere Magnetbandkassetten mit einem Gehäuse und mindestens einem Transportorgan für je mindestens eine Kassette, das mittels einer Ausschubfederanordnung aus dem Gehäuse durch eine frontseitige Gehäuseöffnung herausförderbar, gegen die Federvorspannung im Gehäuse verriegelbar und manuell entriegelbar ist sowie eine Frontwand aufweist, die in der verriegelten Position die Gehäuseöffnung abdeckt, sowie mit einer frontseitigen Anzeigeanordnung für die Belegung jedes Transportorgans, dadurch gekennzeichnet, daß jede Anzeigeanordnung umfaßt :

(a) ein von Wandungsteilen umgebenes Fenster (500),

(b) ein senkrecht zur Frontwand (100) verschieblich gelagertes Anzeigeorgan mit einem Signalabschnitt 502, der gegen die Wandungsteile optisch kontrastiert und in einer ersten Anzeigeposition in das Fenster hineinverschoben ist, während er in einer zweiten Anzeigeposition aus dem Fenster heraus hinter die Frontwand verlagert ist,

(c) ein mit dem Anzeigeorgan in Wirkverbindung stehendes Steuerorgan (506), das von einer Feder (504) in eine erste Endlage vorgespannt ist, in der es in den für die Kassette bestimmten Raum des Transportorgans (101) ragt und den Signalabschnitt in eine seiner Anzeigepositionen steuert, und aus der es durch eine von einer Kassette ausgeübte Kraft in eine zweite Endlage gegen die Federvorspannung verlagerbar ist, in der es den Signalabschnitt in die andere seiner Anzeigepositionen umsteuert.

2. Behälter für flache Audio- oder Videoaufzeichnungsträger, insbesondere Magnetbandkassetten mit einem Gehäuse und mindestens einem Transportorgan für je mindestens eine Kassette, das mittels einer Ausschubfederanordnung aus dem Gehäuse durch eine frontseitige Gehäuseöffnung herausförderbar, gegen die Federvorspannung im Gehäuse verriegelbar und manuell entriegelbar ist sowie eine Frontwand aufweist, die in der verriegelten Position die Gehäuseöffnung abdeckt, sowie mit einer frontseitigen Anzeigeanordnung für die Belegung jedes Transportorgans, dadurch gekennzeichnet, daß jede Anzeigeanordnung umfaßt :

(a) ein von Wandungsteilen umgebenes Fenster (118),

(b) ein dreh- oder schwenkbeweglich gelagertes Anzeigeorgan (126) mit einem Signalabschnitt (140), der gegen die Wandungsteile (100) optisch kontrastiert und in einer ersten Anzeigeposition in das Fenster hineingedreht bzw. -verschwenkt ist, während er in einer zweiten Anzeigeposition aus dem Fenster heraus hinter die Wandungsteile verlagert ist,

(c) ein mit dem Anzeigeorgan in Wirkverbindung stehendes Steuerorgan (138), das von einer Feder (132) in eine erste Endlage vorgespannt ist, in der es in den für die Kassette bestimmten Raum des Transportorgans ragt und den Signalabschnitt in eine seiner Anzeigepositionen steuert, und aus der es durch eine von einer Kassette ausgeübte Kraft in eine zweite Endlage gegen die Federvorspannung verdreh- oder verschwenkbar ist, in der es den Signalabschnitt in die andere seiner Anzeigepositionen umsteuert.

3. Behälter für Audio- und Videoaufzeichnungsträger, insbesondere für Magnetbandkassetten, mit einem Gehäuse und mindestens einem Transportorgan für je einen Aufzeichnungsträger, das mittels einer Ausschubfederanordnung aus dem Gehäuse durch eine frontseitige Gehäuseöffnung herausförderbar, gegen die Federvorspannung im Gehäuse verriegelbar und manuell entriegelbar ist sowie eine Frontwand aufweist, die in der verriegelten Position die Gehäuseöffnung abdeckt, sowie mit einer frontseitigen Anzeigeanordnung für die Belegung jedes Transportorgans, dadurch gekennzeichnet, daß jede Anzeigeanordnung umfaßt :

(a) ein von Wandungsteilen umgebenes Fester (104),

(b) ein im wesentlichen parallel zur Frontwand verlagerbares Anzeigeorgan mit einem Signalabschnitt (606, 206), der gegen die Wandungsteile (100) optisch kontrastiert und in einer ersten Anzeigeposition in dem Fenster erscheint, während er in einer zweiten Anzeigeposition aus dem Fenster hinter die Wandungsteile verschwindet,

(c) einen mit dem Anzeigeorgan in Wirkverbindung stehendes Steuerorgan (604, 202), das von einer Feder (604, 202) in eine erste Endlage vorgespannt ist, in der es in den für die Kassette bestimmten Raum ragt und den Signalabschnitt in eine seiner Anzeigepositionen steuert, und aus der es durch Niederdrücken mittels einer in das Transportorgan eingeführten Kassette in deren Bewegungsrichtung in eine zweite Endlage gegen die Federvorspannung verlagert wird, in der es den Signalabschnitt in die andere seiner Anzeigepositionen in Richtung der Einführbewegung der Kassette umsteuert.

4. Behälter nach einem der Ansprüche 1, 2 oder 3, bei dem das Transportorgan ein Schieber mit starr angeformter Frontwand ist, parallel zu der das Einlegen und Entnehmen des Aufbewahrungsguts erfolgt, das dabei in bzw. außer Kontakt mit dem Steuerorgan (138, 202, 304, 408, 506, 604) gelangt.

5. Behälter nach einem der Ansprüche 1, 2 oder 3, bei dem das Transportorgan ein Schieber mit bei herausgefördertem Schieber verlagerbarer Frontwand (702) ist, an der die Anzeigeanordnung angeordnet ist, welche durch Verlagern der Frontwand in die Abdeckposition das Steuerorgan (708, 1228) in Kontakt mit einem in den Schieber eingeführten Aufzeichnungsträger treten läßt.

6. Behälter nach einem der vorangehenden Ansprüche, bei dem das Anzeigeorgan, das Steuerorgan und die Feder Teile einer Baugruppe (116, 118, 122, 126, 128, 132) bilden, die in das Transportorgan eingefügt ist.

7. Behälter nach Anspruch 6, bei der die Baugruppe an der Frontwand montiert ist.

8. Behälter nach einem der vorangehenden Ansprüche, bei dem die mit dem Steuerorgan zusammenwirkende Feder eine Metallfeder (132) ist.

9. Behälter nach einem der Ansprüche 1, 2 oder 3, bei dem die Anzeigeanordnung (602, 604, 606 ; 610, 612, 614) am Gehäuse montiert ist.

10. Behälter nach einem der vorangehenden Ansprüche, bei dem das Anzeigeorgan (140) in einer seiner Endlagen über die äußere Frontwandebene hinausragt.

11. Behälter nach einem der vorangehenden Ansprüche, bei dem das Fenster eine transparente Abdeckung (118) aufweist.

12. Behälter nach Anspruch 11, bei dem die Abdeckung (118) über die äußere Frontwandebene hinausragt.

13. Behälter nach einem der vorangehenden Ansprüche mit Mitteln (111) zum Sicherstellen des Kontakts zwischen dem Steuerorgan und dem Aufbewahrungsgut trotz Abmessungstoleranzen des letzteren.

14. Behälter nach einem der vorangehenden Ansprüche, bei dem das Fenster (114) in der Schieberfrontwand (100) ausgebildet ist.

**Claims**

1. Container for flat audio or video recording media, especially magnetic tape cassettes, with a housing and at least one transporter, each for at least one cassette, which transporter can be conveyed out of the housing through an opening in the front of the housing by means of an ejector spring arrangement, can be locked in the housing against the spring bias and manually unlocked and also has a front wall which in the locked position covers the housing opening, and with an indicator arrangement at the front to indicate whether each transporter is occupied, characterised in that each indicator arrangement comprises :

(a) a window (500) surrounded by wall portions,

(b) an indicator member supported so as to be slidable perpendicularly to the front wall (100) and having a signal portion (502) which is optically contrasted with the wall portions and which in a first indicating position is moved into the window, while in a second indicating position it is moved out of the window, behind the front wall.

(c) a control member (506) which is operatively connected with the indicator member and is biased by a spring (504) into a first end position in which it projects into the space in the transporter (101) intended for the cassette and brings the signal portion into one of its indicating positions, and from which it can be moved against the spring bias by means of a force exerted by a cassette into a second end position in which it switches the signal portion over into the other of its indicating positions.

2. Container for flat audio or video recording media, especially magnetic tape cassettes, with a housing and at least one transporter, each for at least one cassette, which transporter can be conveyed out of the housing through an opening in the front of the housing by means of an ejector spring arrangement, can be locked in the housing against the spring bias and unlocked manually and also has a front wall which in the locked position covers the housing opening, and with an indicator arrangement at the front to indicate whether each transporter is occupied, characterised in that each indicator arrangement comprises :

   (a) a window (118) surrounded by wall portions,

   (b) an indicating member (126) supported so as to be rotatable or pivotable and having a signal portion (140) which is optically contrasted with the wall portions (100) and which in a first indicating position is rotated or pivoted into the window, while in a second indicating position it is moved out of the window, behind the wall portions,

   (c) a control member (138) which is operatively connected with the indicator member and is biased by a spring (132) into a first end position in which it projects into the space in the transporter intended for the cassette and brings the signal portion into one of its indicating positions, and from which it can be rotated or pivoted against the spring bias by means of a force exerted by a cassette into a second end position in which it switches the signal portion over into the other of its indicating positions.

3. Container for audio and video recording media, especially magnetic tape cassettes, with a housing and at least one transporter, each for one recording medium, which transporter can be conveyed out of the housing through an opening in the front of the housing by means of an ejector spring arrangement, can be locked in the housing against the spring bias and manually unlocked and also has a front wall which in the locked position covers the housing opening, and with an indicator arrangement at the front to indicate whether each transporter is occupied, characterised in that each indicator arrangement comprises :

   (a) a window (104) surrounded by wall portions,

   (b) an indicator member supported so as to be movable substantially parallel to the front wall, having a signal portion (606, 206) which is optically contrasted with the wall portions (100) and which in a first indicating position appears in the window, while in a second indicating position it disappears out of the window, behind the wall portions.

   (c) a control member (604, 202) which is operatively connected with the indicator member and is biased by a spring (604, 202) into a first end position in which it projects into the space intended for the cassette and brings the signal portion into one of its indicating positions, and from which it can be moved against the spring bias by being depressed by means of a cassette inserted into the transporter, in the direction of movement of the cassette, into a second end position in which it switches the signal portion over into the other of its indicating positions in the cassette insertion direction.

4. Container according to one of Claims 1, 2 or 3, wherein the transporter is a slider member with rigidly moulded-on front wall, parallel to which the insertion and removal of the material being stored takes place, the latter thereby coming respectively into or out of contact with the control member (138, 202, 304, 408, 506, 604).

5. Container according to one of Claims 1, 2 or 3, wherein the transporter is a slider member having a front wall (702) which is displaceable when the slider member is extended and on which there is arranged the indicating arrangement which by displacement of the front wall into the covering position allows the control member (708, 1228) to come into contact with a recording medium introduced into the slider member.

6. Container according to one of the preceding Claims, wherein the indicator member, the control member and the spring form parts of a sub-assembly (116, 118, 122, 126, 128, 132) which is inserted into the transporter.

7. Container according to Claim 6, wherein the sub-assembly is mounted on the front wall.

8. Container according to one of the preceding Claims, wherein the spring co-operating with the control member is a metal spring (132).

9. Container according to one of Claims 1, 2 or 3, wherein the indicator arrangement (602, 604, 606 ; 610, 612, 614) is mounted on the housing.

10. Container according to one of the preceding Claims, wherein the indicator member (140) in one of its end positions projects beyond the outer front wall plane.

11. Container according to one of the preceding Claims, wherein the window has a transparent cover (118).

12. Container according to Claim 11, wherein the cover (118) projects beyond the outer front wall plane.

13. Container according to one of the preceding Claims, with means (111) to ensure contact between the control member and the material being stored, in spite of tolerances in the dimensions of the latter.

14. Container according to one of the preceding Claims, wherein the window (114) is formed in the slider member front wall (100).

**Revendications**

1. Réceptacle pour supports d'enregistrement audio ou vidéo plats, notamment des cassettes à bande magnétique, comportant un boîtier et au moins un organe de transport chacun pour au moins une cassette, qui peut être extrait hors du boîtier à travers une ouverture frontale de boîtier au moyen d'un dispositif à ressort d'extraction, qui peut être verrouillé à l'intérieur du boîtier à l'encontre de la précontrainte du ressort, qui peut être déverrouillé manuellement, et présentant une paroi frontale qui recouvre l'ouverture de boîtier dans la position de verrouillage, ainsi qu'un dispositif indicateur frontal pour l'occupation de chaque organe de transport, caractérisé en ce que chaque dispositif indicateur comprend :

a) une fenêtre (500) entourée par des parties de paroi,

b) un organe indicateur monté de manière à pouvoir se déplacer perpendiculairement à la paroi frontale (100) et comportant un secteur de signalisation (502) qui contraste optiquement par rapport aux parties de paroi et qui, dans une première position d'indication, est engagé dans la fenêtre, alors que dans une deuxième position d'indication, il est déporté hors de la fenêtre, derrière la paroi frontale,

c) un organe de commande (506) restant en liaison fonctionnelle avec l'organe indicateur et précontraint par un ressort (504) dans une première position extrême dans laquelle il pénètre dans l'espace de l'organe de transport (101) alloué à la cassette et actionne le secteur de signalisation vers l'une de ses positions d'indication, et à partir de laquelle il peut être déplacé à l'encontre de la précontrainte du ressort, par la force exercée par une cassette, vers une deuxième position extrême dans laquelle il actionne inversement le secteur de signalisation vers l'autre de ses positions d'indication.

2. Réceptacle pour supports d'enregistrement audio ou vidéo plats, notamment des cassettes à bande magnétique, comportant un boîtier et au moins un organe de transport chacun pour au moins une cassette, qui peut être extrait hors du boîtier à travers une ouverture frontale de boîtier au moyen d'un dispositif à ressort d'extraction, qui peut être verrouillé à l'intérieur du boîtier à l'encontre de la précontrainte du ressort, qui peut être déverrouillé manuellement et présentant une paroi frontale qui recouvre l'ouverture de boîtier dans la position de verrouillage, ainsi qu'un dispositif indicateur frontal pour l'occupation de chaque organe de transport, caractérisé en ce que chaque dispositif indicateur comprend :

a) une fenêtre (118) entourée par des parties de paroi,

b) un organe indicateur (126) monté de manière à pouvoir se déplacer de manière rotative ou pivotante et comportant un secteur de signalisation (140), qui contraste optiquement par rapport aux parties de paroi (100) et qui, dans une première position d'indication, est engagé dans la fenêtre par rotation ou pivotement, alors que dans une deuxième position d'indication, il est déporté hors de la fenêtre, derrière les parties de paroi,

c) un organe de commande (138) en liaison fonctionnelle avec l'organe indicateur et précontraint par un ressort (132) dans une première position extrême dans laquelle il pénètre dans l'espace de l'organe de transport (101) alloué à la cassette et actionne le secteur de signalisation vers l'une de ses positions d'indication, et à partir de laquelle il peut être déplacé par rotation ou pivotement à l'encontre de la précontrainte du ressort, par la force exercée par une cassette, vers une deuxième position extrême dans laquelle il actionne inversement le secteur de signalisation vers l'autre de ses positions d'indication.

3. Réceptacle pour supports d'enregistrement audio ou vidéo, notamment des cassettes à bande magnétique, comportant un boîtier et au moins un organe de transport chacun pour au moins une cassette, qui peut être extrait hors du boîtier à travers une ouverture frontale de boîtier au moyen d'un dispositif à ressort d'extraction, qui peut être verrouillé à l'intérieur du boîtier à l'encontre de la précontrainte du ressort, qui peut être déverrouillé manuellement et présentant une paroi frontale qui recouvre l'ouverture de boîtier dans la position de verrouillage, ainsi qu'un dispositif indicateur frontal pour l'occupation de chaque organe de transport, caractérisé en ce que chaque dispositif indicateur comprend :

a) une fenêtre (104) entourée par des parties de paroi,

b) un organe indicateur susceptible d'être déplacé sensiblement de manière parallèle à la paroi frontale et comportant un secteur de signalisation (606, 206) qui contraste optiquement par rapport aux parties de paroi (100) et qui, dans une première position d'indication, apparaît dans la fenêtre, alors que dans une deuxième position d'indication, il disparaît de la fenêtre, derrière les parties de paroi,

c) un organe de commande (604, 202) restant en liaison fonctionnelle avec l'organe indicateur et précontraint par un ressort (604, 202) dans une première position extrême dans laquelle il pénètre dans l'espace alloué à la cassette et actionne le secteur de signalisation vers l'une de ses positions d'indication, et à partir de laquelle il peut être déplacé, à l'encontre de la précontrainte du ressort, en étant repoussé vers le bas par une cassette introduite dans l'organe de transport, dans la direction du mouvement de celle-ci, vers une deuxième position extrême dans laquelle il actionne inversement, dans la direction du mouvement d'introduction de la cassette, le secteur de signalisation vers l'autre de ses positions d'indication.

4. Réceptacle selon l'une des revendications 1, 2 ou 3, dans lequel l'organe de transport est un tiroir sur lequel est formé de manière rigide, une paroi frontale parallèlement à laquelle s'effectue l'insertion et l'extraction du produit à ranger qui à cette occasion rentre en contact ou perd le contact avec l'organe de commande (138, 202, 304, 408, 506, 604).

5. Réceptacle selon l'une des revendications 1, 2 ou 3, dans lequel l'organe de transport est un tiroir comportant une paroi frontale (702) susceptible d'être déplacée lorsque le tiroir est extrait, à laquelle le dispositif indicateur est agencé, et qui, par déplacement de la paroi frontale en position de recouvrement, autorise l'entrée en contact de l'organe de commande (708, 1228) avec un support d'enregistrement introduit dans le tiroir.

6. Réceptacle selon l'une des revendications précédentes, dans lequel l'organe indicateur, l'organe de commande et le ressort constituent les parties d'un module (116, 118, 122, 126, 128, 132) qui est inséré dans l'organe de transport.

7. Réceptacle selon la revendication 6, dans lequel le module est monté à la paroi frontale.

8. Réceptacle selon l'une des revendications précédentes, dans lequel le ressort coopérant avec l'organe de commande est un ressort métallique (132).

9. Réceptacle selon l'une des revendications 1, 2 ou 3, dans lequel le dispositif indicateur (602, 604, 606 ; 610, 612, 614) est monté au boîtier.

10. Réceptacle selon l'une des revendications précédentes, dans lequel l'organe indicateur (140) fait saillie hors du plan extérieur de la paroi frontale, dans l'une de ses positions extrêmes.

11. Réceptacle selon l'une des revendications précédentes, dans lequel la fenêtre comporte un élément de recouvrement (118) transparent.

12. Réceptacle selon la revendication 11, dans lequel l'élément de recouvrement (118) fait saillie hors du plan extérieur de la paroi frontale.

13. Réceptacle selon l'une des revendications précédentes, comportant des moyens (11) destinés à assurer le contact entre l'organe de commande et le produit à ranger, malgré les tolérances dimensionnelles de ce dernier.

14. Réceptacle selon l'une des revendications précédentes, dans lequel la fenêtre (114) est réalisée dans la paroi frontale de tiroir (100).

Fig. 1

104    100    102

Fig. 2

106    100    102

Fig. 3

108    100    102

108    100    102

108    100    102

108    100    102

108    100    102

Fig. 6

Fig. 7

Fig. 4

Fig. 5

Fig. 8

Fig. 9

Fig. 10

Fig. 12

Fig. 11

Fig. 13

Fig. 14

Fig. 15

Fig. 16

Fig. 17

Fig. 18

Fig. 19

Fig. 20

Fig. 21

Fig. 22

Fig. 23

Fig. 24

Fig. 25

Fig. 26

Fig. 27

Fig. 28

Fig. 30

Fig. 29

Fig. 31

Fig. 33

Fig. 32

Fig. 35

Fig. 34

Fig. 36

Fig. 37

Fig. 38

Fig. 40

Fig. 41

Fig. 39

Fig. 42

Fig. 43

Fig. 45

Fig. 44

Fig. 46

Fig. 47

52

23

EP 0 323 437 B1